# EUROPÄISCHE PATENTANMELDUNG

(11) **EP 2 957 893 A1**
(43) Veröffentlichungstag der Anmeldung: **23.12.2015**
(21) Anmeldenummer: 14172656.2
(22) Anmeldetag: 17.06.2014
(51) Int. Cl.: G01N 21/51

(54) **Streulichtmesssystem unter Ausnutzung der Linsenwirkung einer zylindrischen Küvette**

(71) Anmelder: Siemens Healthcare Diagnostics Products GmbH, 35041 Marburg (DE)
(72) Erfinder: Beier, Axel, 16552 Schildow (DE); Nerreter, Stefan, 15754 Heidesee OT Blossin (DE); Anderle, Klaus, 64404 Bickenbach (DE); Steinebach, Wolfgang, 56414 Salz (DE); Pufahl, Holger, 65835 Liederbach (DE); Meller, Paul, 61273 Wehrheim (DE)

(57) **Zusammenfassung**

Die Vorrichtung und das Verfahren zur Messung von Streulicht macht sich den Linseneffekt einer zylindrischen Küvette zunutze. Bei gefüllter Küvette wird das ungestreute Licht auf eine Stoppblende fokussiert. Bei leerer oder fehlender Küvette erreicht ein Teil des ungestreuten Lichts den Detektor und wird dort zur Kalibrierung der Intensität der Lichtquelle verwendet. Zur Bestrahlung der zylindrischen Küvette wird bevorzugt ein divergentes Strahlenbündel eingesetzt, welches nach Austritt aus der gefüllten zylindrischen Küvette zu einem parallelen Strahlenbündel wird.

## Beschreibung

Die Erfindung betrifft ein für ein Analysegerät geeignetes Streulichtmesssystem mit einer Lichtquelle, einer Aufnahmeposition für eine Messzelle und einem Fotodetektor, die derart angeordnet sind, dass ein von der Lichtquelle ausgehender Lichtstrahl durch die Messzelle tritt und auf den Fotodetektor trifft.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Insbesondere können moderne Analysegeräte mit einem Streulichtmesssystem ausgestattet sein. Mittels eines nephelometrischen Streulichtmesssystems lässt sich die Konzentration feinverteilter, kolloidaler Teilchen in Flüssigkeiten oder Gasen quantitativ bestimmen. Wird eine Suspension kleiner Partikel in einen Lichtstrahl verbracht, so wird ein Teil des eintretenden Lichtes absorbiert, ein anderer Teil wird seitlich zum eintretenden Strahl gestreut, und wieder ein anderer Teil, auch als Primärstrahl bezeichnet, verlässt die Suspension ungestreut. Bei der Nephelometrie wird das Streulicht gemessen.

Die Nephelometrie wird vor allem für den quantitativen oder qualitativen Nachweis von Analyten, beispielsweise Proteinen, eingesetzt, die sich mittels einer spezifischen Bindungsreaktion zwischen spezifischen Bindungspartnern, z.B. mittels Antigen-Antikörper-Bindung, nachweisen lassen.

Ein Nephelometriesystem umfasst mindestens ein Mittel zur Erzeugung eines Strahlenbündels, welches eine Lichtquelle umfasst, mindestens einen Fotodetektor sowie mindestens eine Aufnahmeposition für eine Messzelle.

Auf dem Markt existieren unterschiedliche Bauweisen, die sich in der Anordnung von Lichtquelle, Aufnahmeposition für die Messzelle und Fotodetektor unterscheiden. Siehe hierzu auch z.B. Diamandis, E.P. und Christopoulos, T.K., Immunoassay, Academic Press, 1996, Kapitel 17, S. 363 - 387. Beispielsweise kann in einer Bauweise der Fotodetektor seitlich vom von der Lichtquelle ausgesandten Lichtstrahl angeordnet sein, um das gestreute Licht unter einem Winkelbereich von 90° zur Richtung des von der Lichtquelle ausgesandten Lichtstrahls zu erfassen. Dies hat den Vorteil, dass die Intensität des Streulichts relativ niedrig sein kann, und die Beeinflussung der Messung durch den von der Lichtquelle ausgesandten nicht gestreuten Teil des Lichtstrahls, der als Primärstrahl bezeichnet wird, eliminiert wird.

In einer anderen Bauweise können Lichtquelle, Aufnahmeposition und Fotodetektor derart angeordnet sein, dass der Fotodetektor das gestreute Licht unter Winkeln oder Winkelbereichen um die Ausbreitungsrichtung des von der Lichtquelle ausgesandten Lichtstrahls erfasst, in denen die Intensität des Streulichts relativ hoch ist. Den Fotodetektor erreicht in dieser Geometrie jedoch nicht nur das Streulicht, sondern auch der Primärstrahl. Da jedoch nur der gestreute Teil des Lichtes zum Messergebnis beitragen soll und Licht des Primärstrahls, das auf den Detektor trifft, letztlich nur zu einer Verschlechterung des Signal-Rausch-Abstandes führt, ist für eine Optimierung des Messergebnisses eine möglichst vollständige Ausblendung des Primärstrahls erforderlich.

Hierfür werden z.B. optische Blenden eingesetzt. Diese werden mittels dünner Befestigungen wie z. B. Drähten im Strahlengang gehalten und hinsichtlich ihrer Größe und Form so angepasst, dass sie einen möglichst großen Teil des Primärstrahls ausblenden, so dass möglichst ausschließlich Streulicht auf den Detektor trifft. Vorzugsweise ist das Verhältnis von Streulichtanteilen zu Primärstrahlanteilen kleiner als 0,001.

Eine wichtige Rolle zur weiteren Optimierung des Messergebnisses und zur Erhöhung des Signal-Rausch-Abstandes spielt die Größe des Streuvolumens der Probe, aus dem Streulicht auf den Detektor geleitet werden kann. Eine Vergrößerung des Streuvolumens führt dabei theoretisch in der Regel zu einer Verbesserung des Messergebnisses durch eine Erhöhung des Signal-Rausch-Abstandes, falls die apparativen Störungen sehr gut eliminiert werden können. Jedoch treten in der Praxis durch Beleuchtung von Randbereichen der Messzelle häufig störende Effekte, wie z.B. Reflektionen auf, die besonders bei Messzellen mit runden oder ovalen Querschnitten besonders ausgeprägt sein können und zu einer erheblichen Störung des Messsignals führen. Da das benötigte Volumen der Probe möglichst gering sein sollte, da häufig insbesondere z.B. bei pädiatrischen Proben nur geringe Materialmengen zur Verfügung stehen, ist es nicht möglich, eine Vergrößerung des Streuvolumens durch eine Vergrößerung des Querschnitts der Messzelle zu erreichen. Ferner können weitere störende Effekte aufgrund von Materialeigenschaften der Messzelle auftreten, die beispielsweise bei Verunreinigungen oder Inhomogenität der Oberfläche der Messzelle oder des Materials der Messzelle oder Kratzern in der Oberfläche der Messzelle besonders ausgeprägt sind.

Bei einigen bekannten Nephelometriesystemen wird das Strahlenbündel des Primärstrahls in der Probe fokussiert. Somit wird ein nur vergleichsweise kleiner Teil des Probenvolumens beleuchtet. Nur dieser vergleichsweise kleine beleuchtete Teil des Probenvolumens trägt zur Generierung des Streulichtsignals bei. Treten in diesem Teil des Probenvolumens z.B. Verunreinigungen oder andere Inhomogenitäten auf, führt dies häufig zu vergleichsweise starken störenden Effekten hinsichtlich des Messergebnisses.

Es ist daher Aufgabe der Erfindung, ein Streulichtmesssystem zur Verfügung zu stellen, welches eine verbesserte Messqualität bei Verwendung von Messzellen mit relativ kleinem Querschnitt und besonders bei zylinderförmigen Messzellen bietet.

### Diese Aufgabe wird erfindungsgemäß durch die im Folgenden beschriebenen Gegenstände und Verfahren gelöst.

Es wurde gefunden, dass ein verbessertes Streulichtmesssystem erreicht werden kann, wenn ein Strahlenbündel erzeugt wird, das in einer Messzelle in mindestens einer Richtung senkrecht zur optischen Achse des Strahlenbündels ein divergentes Strahlenbündel oder ein paralleles Strahlenbündel darstellt.

Dies hat den Vorteil, dass ein größerer Anteil des Probenvolumens beleuchtet wird und zur Generierung des Signals beitragen kann, soweit dieses beleuchtete Probenvolumen auf mindestens einen Fotodetektor abgebildet wird. Zugleich werden störende Einflüsse der Messzelle vermindert. Somit kann eine Erhöhung des Signal-Rausch-Abstandes insbesondere auch bei vergleichsweise kleinen Messzellen mit ovalen oder runden Querschnitten erreicht werden.

Gegenstand der vorliegenden Erfindung ist ein Streulichtmesssystem mit mindestens einem Mittel zur Erzeugung eines Strahlenbündels, mindestens einer Aufnahmeposition für eine Messzelle mit rundem oder ovalem Querschnitt und mindestens einem Fotodetektor, wobei das Mittel zur Erzeugung eines Strahlenbündels, die Aufnahmeposition der Messzelle und der Fotodetektor derart angeordnet sind, dass das Strahlenbündel nach dem Durchtritt durch eine in der Aufnahmeposition angeordnete Messzelle wenigstens teilweise auf den Fotodetektor trifft und wobei das Mittel zur Erzeugung des Strahlenbündels ein Strahlenbündel erzeugt, das innerhalb einer in der Aufnahmeposition angeordneten Messzelle in mindestens einer Richtung senkrecht zur optischen Achse des Strahlenbündels ein divergentes Strahlenbündel oder ein paralleles Strahlenbündel darstellt.

In besonders bevorzugter Ausführungsform handelt es sich bei dem erfindungsgemäßen Streulichtmesssystem um ein Nephelometer zur Streulichtmessung. Die Vorteile des erfindungsgemäßen Streulichtmesssystems, die durch die Vergrößerung des beleuchteten Streuvolumens erzielt werden, sind auch bei anderen photometrischen Messungen vorteilhaft. In anderen bevorzugten Ausführungsformen handelt es sich bei dem erfindungsgemäßen Streulichtmesssystem beispielsweise um ein Photometer zur Messung der Absorption oder um ein Turbidimeter.

Bei der Etablierung eines erfindungsgemäßen Streulichtmesssystems befindet sich vorteilhafterweise eine mit einem flüssigen Medium gefüllte Messzelle in der Aufnahmeposition. Die Ausgestaltung des Aufbaus des Streulichtmesssystems hängt im Allgemeinen von dem Medium ab, welches mit dem Streulichtmesssystem gemessen werden soll. Beispielsweise sind Größen, Abstände oder Winkel, die in dem Streulichtmesssystem auftreten, vorteilhafterweise an das zu messende Medium anzupassen sein.

Vorzugsweise ist das Streulichtmesssystem für runde Messzellen mit einem Radius von kleiner oder gleich 7 mm, besonders bevorzugt von kleiner oder gleich 6 mm und größer oder gleich 5 mm, ganz besonders bevorzugt von kleiner oder gleich 3 mm und größer oder gleich 2,5 mm angepasst.

In bevorzugter Ausführungsform handelt es sich bei dem Streulichtmesssystem um ein Analysegerät mit einem Pipettiersystem.

In bevorzugter Ausführungsform erzeugt das Mittel zur Erzeugung des Strahlenbündels ein Strahlenbündel, das innerhalb einer in der Aufnahmeposition angeordneten Messzelle in beiden Richtungen senkrecht zur optischen Achse ein divergentes Strahlenbündel oder ein paralleles Strahlenbündel darstellt. Dies hat den Vorteil, dass ein noch größerer Anteil des Probenvolumens beleuchtet wird und zur Generierung des Signals beitragen kann.

In bevorzugter Ausführungsform spannen das divergente Strahlenbündel und die optische Achse in der Messzelle einen Winkel von 2,5 bis 17,5 Grad, bevorzugt von 2,5 bis 10 Grad, ganz besonders bevorzugt von 3 bis 4 Grad auf.

Wenn das Strahlenbündel des Primärstrahls vergleichsweise große Winkelbereiche umfasst, ist der Wirkungsquerschnitt des Streulichts vergleichsweise inhomogen.

In bevorzugter Ausführungsform spannen das parallele Strahlenbündel und die optische Achse in der Messzelle und/oder nach Austritt aus der Messzelle einen Winkel von minus 4 bis 4 Grad, bevorzugt von minus 2,5 bis 2,5 Grad, ganz besonders bevorzugt von minus 1 bis 1 Grad auf.

Bei der Wahl von besonders günstigen Winkeln oder Winkelbereichen sind stets die optischen Eigenschaften und die Geometrie, einschließlich der Größe der Messzelle zu berücksichtigen.

Detektorseitig hängen bevorzugte Winkelbereiche, die auf mindestens einen Fotodetektor abgebildet werden, bekanntermaßen auch von Anforderungen des Messguts ab wie z.B. Größe und Form der Partikel, deren Brechzahl, Oberflächenbeschaffenheiten und/oder Koagulationsverhalten.

In besonders bevorzugter Ausführungsform weist der Teil des Strahlenbündels, der dem Primärstrahl entspricht, in mindestens einer Richtung senkrecht zur optischen Achse, bevorzugt in beiden Richtungen senkrecht zur optischen Achse eine möglichst geringe Divergenz und/oder eine möglichst geringe Konvergenz in der Messzelle und/oder nach Austritt aus der Messzelle auf. Gestreute Anteile des Strahlenbündels stellen nach Austritt aus der Messzelle hingegen kein paralleles Strahlenbündel dar. Dies hat den Vorteil, dass das parallele Strahlenbündel, welches den Primärstrahl darstellt, nach der Messzelle mittels optischer Elemente, beispielsweise einer Sammellinse, besonders einfach auf eine Stoppblende fokussiert und somit eliminiert werden kann, wohingegen gestreute Anteile des Strahlenbündels nicht auf die Stoppblende fokussiert werden und mittels eines Fotodetektors gemessen und analysiert werden können.

In weiterer besonders bevorzugter Ausführungsform bildet das Strahlenbündel nach Austritt aus der Messzelle innerhalb der nächsten 10 mm keinen Fokus aus.

In bevorzugter Ausführungsform umfasst das Mittel zur Erzeugung eines Strahlenbündels eine Lichtquelle und eine Linse, bevorzugt eine Lichtquelle und eine Zylinderlinse. Die Linse ist bevorzugt eine Kollimationslinse.
Die Linse ist dabei zwischen der Lichtquelle und der Aufnahmeposition für die Messzelle angeordnet.

In bevorzugter Ausführungsform ist die Linse eine Sammellinse, bevorzugt eine Zylindersammellinse. Die Sammellinse erzeugt einen Fokus des Strahlenbündels in mindestens einer Richtung senkrecht zur optischen Achse des Strahlenbündels.

In bevorzugter Ausführungsform liegt der durch die Sammellinse erzeugte Fokus des Strahlenbündels vor der Eintrittsfläche in die Messzelle. Dies ermöglicht auf besonders einfache und kostengünstige Weise einen divergenten Strahlenverlauf innerhalb der Messzelle zu erreichen. Insbesondere kann so auch erreicht werden, dass achsnahe Strahlen des Strahlenbündels in der Messzelle eine vergleichsweise große Divergenz aufweisen. Vorteilhafterweise liegt der Fokus des Strahlenbündels hierfür in räumlicher Nähe zur Eintrittsfläche zur Messzelle.

Ein Lichtstrahl oder Lichtstrahlen werden auch als Strahlenbündel bezeichnet.

Bevorzugt handelt es bei dem Streulichtmesssystem um ein zentriertes System, bei dem die optischen Achsen der optischen Elemente zusammenfallen. Bevorzugt breitet sich das Strahlenbündel entlang der optischen Achse aus. Bevorzugt liegt dabei die optische Achse im Bereich des Zentrums des Querschnitts des Strahlenbündels.

In vorteilhafter Ausgestaltung umfasst die Lichtquelle mindestens einen Laser, eine lichtemittierende Diode (LED), eine Glühlampe und/oder eine Gasentladungslampe.

In besonders vorteilhafter Ausgestaltung umfasst die Lichtquelle mindestens eine Laserdiode. Hierdurch kann in besonders einfacher Weise ein kohärenter und kollimierter Lichtstrahl erzeugt werden, der für die Nephelometrie besonders vorteilhafte Eigenschaften hat. Beispielsweise weist der Lichtstrahl eine geringe Divergenz auf und erfährt daher über die Laufweite vergleichsweise wenig Aufweitung. Dadurch sind Primärstrahl und gestreutes Licht im Fotodetektor besonders gut voneinander abgrenzbar. Dies gilt auch nach Streuung, Bündelung oder Umlenkung des Lichtstrahls mittels Linsen und Spiegeln.

Die Verwendung von mindestens einer Laserdiode als Lichtquelle ermöglicht es in besonders einfacher Ausgestaltung, die Stoppblende derart anzuordnen, dass der gesamte Primärstrahl der Laserdiode auf eine Stoppblende trifft. Hierdurch wird von dem Fotodetektor ausschließlich Streulicht aufgenommen und zur Messung verwendet.

In weiterer vorteilhafter Ausgestaltung emittiert die Lichtquelle Licht in Lichtwellenlängenbereichen zwischen 200 nm und 1400 nm. In einer bevorzugten Ausgestaltung emittiert die Lichtquelle Licht in Lichtwellenlängenbereichen zwischen 300 und 1100 nm.

Bei dem Lichtdetektor handelt es sich bevorzugt um eine Photodiode, die sichtbares Licht, in manchen Ausführungen auch IR-, oder UV-Licht durch den inneren Photoeffekt in einen elektrischen Strom bzw. eine Spannung umwandelt.

Die Begriffe "Lichtdetektor" und "Fotodetektor" werden im Rahmen dieser Erfindung synonym.

Alternativ handelt es sich bei dem Lichtdetektor um einen CCD-Sensor. CCD-Sensoren bestehen aus einer Matrix oder einer Zeile mit lichtempfindlichen Photodioden. Wenn Messungen bei verschiedenen Wellenlängen durchgeführt werden sollen, kann jedes Element des CCD-Sensors als Photodetektor dienen, was den apparativen Aufbau erheblich vereinfacht.

Ebenso kann jedoch vorgesehen sein, dass es sich bei dem Lichtdetektor um eine Photozelle, einen Siliziumphotodetektor, einen Avalanchephotodetektor oder einen Photomultiplier handelt.

In vorteilhafter Ausgestaltung umfasst das Streulichtmesssystem eine Blende, bevorzugt eine Lochblende mit bevorzugt einer ovalen, runden, polygonen oder rechteckigen Öffnung, die zwischen Lichtquelle und Linse angeordnet ist. Durch diese Blende kann Form und Größe des beleuchteten Volumens in der Ebene senkrecht zur optischen Achse innerhalb der Messzelle festgelegt werden.

In vorteilhafter Ausgestaltung ist die Normale der Blende um 4 bis 45 Grad, bevorzugt um 6 bis 14 Grad, besonders bevorzugt um 9 bis 11 Grad zur optischen Achse geneigt. Hierdurch können insbesondere störende Reflektionen, beispielsweise Rückreflektionen, vermieden oder vermindert werden. Insbesondere können mehrfach innerhalb des Streulichtmesssystems reflektierte Strahlen des Strahlenbündels so von der optischen Achse weg reflektiert werden und bevorzugt durch Blenden oder Gehäuseteile abgefangen werden, so dass diese nicht auf den Fotodetektor treffen. Somit können störende Einflüsse der Messzelle auf die Messung weiter vermindert werden und eine Erhöhung des Signal-Rausch-Abstandes erreicht werden.

In vorteilhafter Ausgestaltung des Streulichtmesssystems ist die Aufnahmeposition für die Messzelle so ausgestaltet, dass eine in der Aufnahmeposition angeordnete Messzelle zur optischen Achse um 4 bis 25 Grad, bevorzugt um 6 bis 18 Grad, besonders bevorzugt um 7 bis 12 Grad geneigt ist, so dass das Strahlenbündel nicht parallel zu der Flächennormalen der Eintrittsfläche und der Flächennormalen der Austrittsfläche der Messzelle auf die Eintrittsfläche und die Austrittsfläche der Messzelle trifft. Hierdurch können insbesondere störende Reflektionen vermieden oder vermindert werden. Insbesondere können mehrfach innerhalb der Messzelle reflektierte Strahlen des Strahlenbündels so von der optischen Achse weg reflektiert werden und bevorzugt durch Blenden oder Gehäuseteile abgefangen werden, so dass diese nicht auf den Fotodetektor treffen. Somit können störende Einflüsse der Messzelle auf die Messung weiter vermindert werden und eine Erhöhung des Signal-Rausch-Abstandes erreicht werden.

In vorteilhafter Ausgestaltung des Streulichtmesssystems ist eine Sammellinse zwischen der Aufnahmeposition für eine Messzelle und dem Fotodetektor angeordnet, die einen Fokus eines durch eine in der Aufnahmeposition angeordneten Messzelle hindurchtretenden Strahlenbündels erzeugt und wobei im Bereich des durch die Sammellinse erzeugten Fokus des Strahlenbündels eine Stoppblende positioniert ist. Bevorzugt trifft das Strahlenbündel wenigstens teilweise, bevorzugt vollständig auf die Stoppblende. Dies hat den Vorteil, dass Teile des Strahlenbündels, die nicht an der Messzelle oder in der Messzelle gestreut wurden, besonders einfach auf eine Stoppblende fokussiert und somit eliminiert werden können, wohingegen gestreute Anteile des Strahlenbündels nicht auf die Stoppblende fokussiert werden und mittels eines Fotodetektors gemessen und analysiert werden können. Somit kann eine Erhöhung des Signal-Rausch-Abstandes erreicht werden.

Messzellen mit ovalen oder runden Querschnitten, insbesondere wenn sie mit einem flüssigen Medium, beispielsweise einer wässrigen Flüssigkeit oder einer Probe gefüllt sind, können bekanntermaßen als Sammellinse wirken. Die Linsenwirkung der Messzelle ist bei dem Aufbau eines erfindungsgemäßen Streulichtmesssystems stets zu beachten. Die Linseneigenschaften der Messzelle ändern sich im Allgemeinen je nach Füllzustand. Insbesondere bei einer leeren, nicht mit flüssigem Medium gefüllten Messzelle, die beispielsweise Luft enthält, kann die Wirkung der Messzelle als Sammellinse abgeschwächt oder nicht mehr vorhanden sein. Hierdurch wird der Verlauf des Strahlenbündels nach Durchtritt durch die Messzelle entsprechend verändert.

In vorteilhafter Ausgestaltung des Streulichtmesssystems sind die Komponenten des Streulichtmesssystems derart angeordnet, dass bei leerer Messzelle und/oder ohne Messzelle in der Aufnahmeposition das Strahlenbündel wenigstens teilweise nicht auf die Stoppblende trifft und wenigstens teilweise auf den Fotodetektor trifft.

Dies hat den Vorteil, dass der Primärstrahl besonders leicht und mit vergleichsweise geringem Aufwand charakterisieret werden kann. Dies kann beispielsweise vor, zwischen und/oder nach Messungen von Proben in einer Messzelle erfolgen. Bevorzugt erfolgt die Charakterisierung des Primärstrahls automatisch. Bevorzugt umfasst die Charakterisierung des Primärstrahls beispielsweise die Ermittlung der Intensität, der Polarisation, der Divergenz und/oder der Wellenlänge des Primärstrahls. Bevorzugt erfolgt die Charakterisierung des Primärstrahls zu Kalibrationszwecken.

Ein anderer Gegenstand der Erfindung ist ein Analysegerät, welches ein vorgenanntes erfindungsgemäßes Streulichtmesssystem umfasst.

Die Erfindung umfasst auch Verfahren zur Bestimmung der Konzentration, Menge und/oder Aktivität mindestens eines Analyten in einer Probe, wobei die Probe mit einem oder mehreren Reagenzien zu einem Reaktionsansatz vermischt wird und die Änderung der Absorption und/oder die Änderung der Intensität des gestreuten Lichts mit einem erfindungsgemäßen Streulichtmesssystem oder mit einem erfindungsgemäßen Analysegerät bestimmt wird, wobei die Änderung der Absorption und/oder die Änderung der Intensität des gestreuten Lichts mit der Konzentration, Menge und/oder Aktivität des Analyten korreliert.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

In vorteilhafter Ausgestaltung umfasst das Streulichtmesssystem mindestens zwei Aufnahmepositionen für jeweils eine Messzelle, wobei wenigstens das mindestens eine Mittel zur Erzeugung eines Strahlenbündels, das mindestens eine Mittel zur Fokussierung eines Strahlenbündels, die mindestens eine Blende mit einer definierten Öffnung und der mindestens eine Fotodetektor relativ zu den mindestens zwei Aufnahmepositionen bewegbar sind, vorzugsweise auf einer Kreisbahn bewegbar. Dies hat beispielsweise den Vorteil, dass ein höherer Probendurchsatz erzielt werden kann. Ferner kann es vorteilhaft sein, wenn die Aufnahmepositionen für die Messzellen ortsfest angeordnet sind. So können beispielsweise Erschütterungen und andere Beschleunigungskräfte wie beispielsweise Zentripetalkräfte, welche die Probe in der Messzelle beeinflussen können, vermieden werden. Ferner kann z.B. auch während Messungen oder zwischen Messungen auf die Proben leichter zugegriffen werden.

In bevorzugter Ausgestaltung des Streulichtmesssystems sind die mindestens zwei Aufnahmepositionen für jeweils eine Messzelle in einer Kreisbahn, bevorzugt in mindestens zwei konzentrischen Kreisbahnen angeordnet. Dies hat beispielsweise den Vorteil, dass pro Flächeneinheit eine größere Anzahl von Aufnahmepositionen angeordnet werden können. Fernern kann hierdurch der Probendurchsatz weiter erhöht werden.

In bevorzugter Ausgestaltung des Streulichtmesssystems ist die Aufnahmeposition zur Aufnahme einer Messzelle mit ovalen oder runden Querschnitten geeignet. Dies ist beispielsweise vorteilhaft, da je nach Anforderungen an das Streulichtmesssystem und/oder dessen Messeigenschaften Messzellen mit bestimmen Querschnitten vorteilhaft sein können.

In weiterer bevorzugter Ausgestaltung des Streulichtmesssystems umfasst das Streulichtmesssystem mindestens eine Messzelle mit ovalen und/oder runden Querschnitten.

Unter ovalen oder runden Querschnitten sind auch beispielsweise halbkugelförmige Querschnitte zu verstehen. Ferner sind unter ovalen oder runden Querschnitten auch polygone Querschnitte zu verstehen, die ovalen oder runden Querschnitten ähnlich sind.

Bei der Messzelle kann es sich z.B. um eine Küvette handeln, die häufig aus Glas, Kunststoff oder Quarzglas besteht. Auch Durchflussküvetten können im erfindungsgemäßen Streulichtmesssystem als Messzelle eingesetzt werden.

Die erfindungsgemäßen Gegenstände und Verfahren der vorliegenden Patentanmeldung werden außerdem in den Patentansprüchen beschrieben.

### Die Erfindung wird anhand von Zeichnungen exemplarisch näher erläutert. Darin zeigen:

- FIG 1: schematisch den Aufbau und den Lichtstrahlengang in einem Streulichtmesssystem (1) mit einer Messzelle (2) in der Aufnahmeposition (3) aus Blickrichtung A betrachtet,
- FIG 2: schematisch den Aufbau und den Lichtstrahlengang in einem Streulichtmesssystem (1) ohne Messzelle (2) in der Aufnahmeposition (3) aus Blickrichtung A betrachtet, und
- FIG 3: schematisch den Aufbau und den Lichtstrahlengang in einem Streulichtmesssystem (1) mit einer Messzelle (2) in der Aufnahmeposition (3) aus Blickrichtung B betrachtet.

Gleiche Teile sind in allen Figuren mit denselben Bezugszeichen versehen.

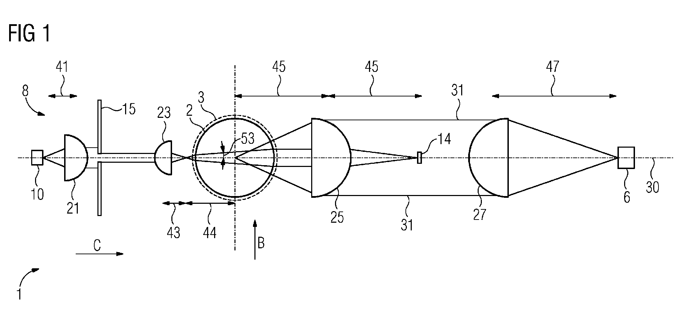

Das Streulichtmesssystem (1) gemäß FIG 1 ist eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Pipettiereinrichtugnen und Transporteinrichtungen sowie weiterhin eine Steuereinheit zum automatisierten Auswerten der Analysen.

Das Streulichtmesssystem (1) umfasst eine Aufnahmeposition (3) für eine Messzelle (2). Es umfasst weiterhin einen Fotodetektor (6), der die Stärke des Lichteinfalls auf einer vorgegebenen Fläche messen kann und ein Mittel (8) zur Erzeugung eines Strahlenbündels, das eine Lichtquelle (10) in Form einer Laserdiode und eine vorgeschaltete Linse (21) mit Brennweite (41) umfasst. Das Mittel (8) zur Erzeugung eines Strahlenbündels emittiert somit ein paralleles Strahlenbündel kohärenten und kollimierten Laserlichts. Dieses ist in die durch einen Pfeil angezeigte Richtung C gerichtet und trifft teilweise durch eine Öffnung in der Blende (15) auf eine weitere Linse (23) mit einer Brennweite (43), die einen Fokus vor der Messzelle (2) in der Aufnahmeposition (3) erzeugt. Die Messzelle (2) wirkt als Linse mit der Brennweite (44). Nach dem Fokus tritt das divergente Strahlenbündel in die Messzelle (2) ein und spannt in der Messzelle (2) mit der optischen Achse (30) einen Winkel (53) auf. Nach Austritt aus der Messzelle (2) ist das Strahlenbündel aufgrund der Linsenwirkung der Messzelle (2) parallel und trifft auf eine Linse (25) mit einer Brennweite (45), die das Strahlenbündel auf eine Stoppblende (14) fokussiert.

Durch in der Messzelle (2) befindliche Partikel oder Partikelaggregate, die z. B. im Verlauf einer Antigen-Antikörper-Reaktion entstehen oder sich vermindern, wird ein Teil des Strahlenbündels gestreut, so dass nur noch ein Teil ungestreut die Messzelle (2) verlässt. Bei diesem Teil handelt es sich um den Primärstrahl. Ein weiterer Teil des Lichts wird gestreut (31), was im Allgemeinen zu einer Aufweitung des Strahlenbündels führt.

Im Bereich des Zentrums der Messzelle (2) gestreutes (31) Licht tritt divergent aus der Messzelle (2) aus und trifft auf eine Linse (25) mit der Brennweite (45) und wird von dieser parallelisiert. Das parallelisierte Licht trifft auf eine Linse (27) mit der Brennweite (47) und wird auf den Fotodetektor (6) fokussiert. Der Fotodetektor (6) ermittelt die Stärke des auftreffenden Lichts.

Die Linsen (21, 23, 25, 27) sind als Sammellinsen ausgelegt, bevorzugt als Zylindersammellinsen.

Die Richtungen A und B sind um jeweils 90° gegenüber der Richtung C abgewinkelt. Die Richtung A ist um 90° gegenüber der Richtung B abgewinkelt.

Der Fotodetektor (6) ist an eine Steuereinheit angeschlossen und ermöglicht hier eine Auswertung von in der Messzelle entstehendem, veränderlichem Streulicht. Sämtliche beschriebenen Bauteile können in einem Gehäuse (nicht gezeigt) untergebracht sein.

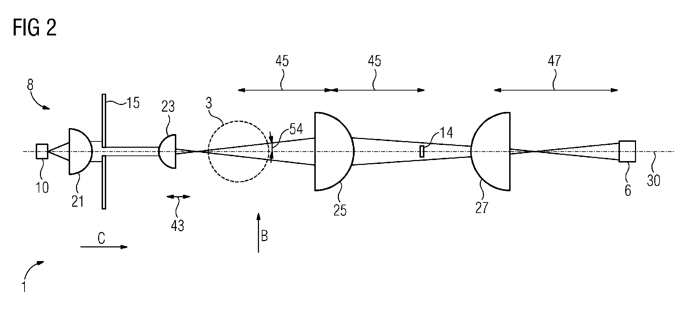

Zur Verdeutlichung des Strahlengangs des Strahlenbündels bei leerer Aufnahmeposition (3) ist dieser in FIG 2 schematisch dargestellt.

Das Mittel (8) zur Erzeugung eines Strahlenbündels emittiert ein paralleles Strahlenbündel kohärenten und kollimierten Laserlichts. Dieses ist in die durch einen Pfeil angezeigte Richtung C gerichtet und trifft teilweise durch eine Öffnung in der Blende (15) auf die Linse (23) mit einer Brennweite (43), die einen Fokus vor der Aufnahmeposition (3) erzeugt. In der Aufnahmeposition (3) befindet sich keine Messzelle (2). Nach dem Fokus spannt das nun divergente Strahlenbündel in der Aufnahmeposition (3) mit der optischen Achse (30) einen Winkel (54) auf. Hinter der Aufnahmeposition (3) trifft das Strahlenbündel auf eine Linse (25) mit einer Brennweite (45). Nach Austritt des Strahlenbündels aus der Linse (25) ist das Strahlenbündel konvergent, wobei der Fokus nicht im Bereich der Stoppblende (14) liegt. Das Strahlenbündel passiert teilweise die Stoppblende (14) und trifft auf eine Linse (27) mit der Brennweite (47). Nach Austritt aus der Linse (27) bildet das Strahlenbündel einen Fokus aus und trifft als divergentes Strahlenbündel auf den Fotodetektor (6).

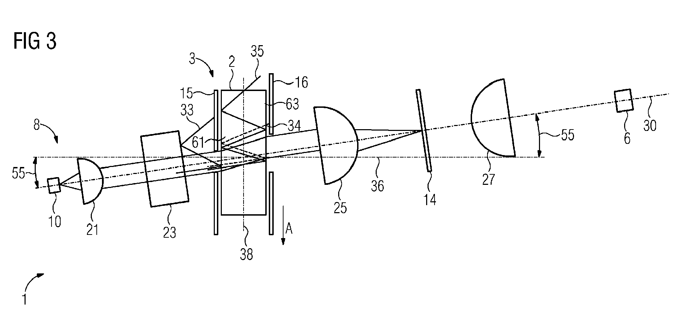

FIG 3 zeigt ein weiteres Streulichtmesssystem (1). Es ist der Strahlengang des Strahlenbündels aus Blickrichtung B schematisch dargestellt.

Das Mittel (8) zur Erzeugung eines Strahlenbündels emittiert ein paralleles Strahlenbündel kohärenten und kollimierten Laserlichts. Dieses ist in die durch einen Pfeil angezeigte Richtung C gerichtet und trifft auf eine Linse (23), die in Blickrichtung A keine fokussierende Wirkung auf das Strahlenbündel hat (z.B. Zylinderlinse). Das weiterhin parallele Strahlenbündel passiert eine Öffnung in einer Blende (15), deren Normale zur optischen Achse (30) um den Winkel (55) geneigt ist.

Das parallele Strahlenbündel trifft auf die Eintrittsfläche (61) der Messzelle (2), durchtritt die Messzelle (2) und trifft auf die Austrittsfläche (63) der Messzelle (2).

Die Richtungsänderung des parallelen Strahlenbündels bei Eintritt in die Eintrittsfläche (61) der Messzelle (2) und bei Austritt aus der Austrittsfläche (63) der Messzelle (2) ist zur besseren Erkennbarkeit schematisch überzeichnet gezeigt für eine Messzelle (2), die mit einem homogenen Medium gefüllt ist, das die gleiche optische Dichte aufweist wie die Eintrittsfläche (61) der Messzelle (2) und die Austrittsfläche (63) der Messzelle (2). Im Allgemeinen wird diese optische Dichte größer sein als beispielsweise die optische Dichte von Luft unter Normalbedingungen, von der die Messzelle beispielsweise umgeben ist.

Die Normale (36) der Symmetrieachse (38) der Messzelle (2) ist um einen Winkel (55) zur optischen Achse (30) geneigt.

Nach Austritt aus der Messzelle (2) ist das Strahlenbündel weiterhin ein paralleles Strahlenbündel und trifft auf eine Linse (25) mit einer Brennweite (45), die das Strahlenbündel auf eine Stoppblende (14) fokussiert.

Einzelne Strahlen (33) des Strahlenbündels werden beim Auftreffen auf die Eintrittsfläche (61) der Messzelle (2) reflektiert und zurück auf die Linse (23) geworfen. Von der Linse (23) werden die Strahlen (33) teilweise erneut reflektiert und auf die Blende (15) geworfen, wo sie absorbiert werden.

Einzelne Strahlen (34) des Strahlenbündels werden im Innern der Messzelle (2) mehrfach reflektiert und werden auf die Blende (16) geworfen, wo sie absorbiert werden.

Einzelne Strahlen (35) des Strahlenbündels werden im Innern der Messzelle (2) mehrfach reflektiert und treten aus der Messzelle unter einem Winkel zur optischen Achse (30) aus.

Da die Normale (36) der Symmetrieachse (38) der Messzelle (2) um einen Winkel (55) zur optischen Achse (30) geneigt ist, trifft keiner der hier beispielhaft dargestellten einzelnen, reflektierten oder mehrfach reflektierten Strahlen (33, 34, 35) auf den Fotodetektor (6).

### Bezugszeichenliste

- 1: Streulichtmesssystem
- 2: Messzelle
- 3: Aufnahmeposition
- 6: Fotodetektor
- 8: Mittel zur Erzeugung eines Strahlenbündels
- 10: Lichtquelle
- 14: Stoppblende
- 15, 16: Blende
- 21, 23, 25, 27: Linse
- 30: Optische Achse
- 31: Streulicht
- 33, 34, 35: Strahlen
- 36: Normale
- 38: Symmetrieachse
- 41, 43, 44, 45, 47: Brennweite
- 53, 54, 55: Winkel
- 61: Eintrittsfläche
- 63: Austrittsfläche
- A, B, C: Richtung

## Patentansprüche

1. Streulichtmesssystem (1) mit mindestens einem Mittel (8) zur Erzeugung eines Strahlenbündels, mindestens einer Aufnahmeposition (3) für eine Messzelle (2) mit rundem oder ovalem Querschnitt und mindestens einem Fotodetektor (6), wobei das Mittel (8) zur Erzeugung eines Strahlenbündels, die Aufnahmeposition (3) für eine Messzelle (2) und der Fotodetektor (6) derart angeordnet sind, dass das Strahlenbündel nach dem Durchtritt durch eine in der Aufnahmeposition (3) angeordnete Messzelle (2) wenigstens teilweise auf den Fotodetektor (6) trifft,
**dadurch gekennzeichnet, dass**
das Mittel (8) zur Erzeugung des Strahlenbündels ein Strahlenbündel erzeugt, das innerhalb einer in der Aufnahmeposition (3) angeordneten Messzelle (2) in mindestens einer Richtung senkrecht zur optischen Achse (30) des Strahlenbündels ein divergentes Strahlenbündel oder ein paralleles Strahlenbündel darstellt.

2. Streulichtmesssystem (1) nach Anspruch 1, wobei das Mittel (8) zur Erzeugung des Strahlenbündels ein Strahlenbündel erzeugt, das innerhalb einer in der Aufnahmeposition (3) angeordneten Messzelle (2) in beiden Richtungen senkrecht zur optischen Achse (30) ein divergentes Strahlenbündel oder ein paralleles Strahlenbündel darstellt.

3. Streulichtmesssystem (1) nach einem der vorhergehenden Ansprüche, wobei das divergente Strahlenbündel und die optische Achse (30) einen Winkel (53) von 2,5 bis 17,5 Grad, bevorzugt von 2,5 bis 10 Grad, ganz besonders bevorzugt von 3 bis 4 Grad innerhalb einer in der Aufnahmeposition (3) angeordnete Messzelle (2) aufspannen.

4. Streulichtmesssystem (1) nach einem der vorhergehenden Ansprüche, wobei das Strahlenbündel, das innerhalb einer in der Aufnahmeposition (3) angeordneten Messzelle (2) in mindestens einer Richtung senkrecht zur optischen Achse (30) des Strahlenbündels in der Messzelle (2) ein divergentes Strahlenbündel oder ein paralleles Strahlenbündel darstellt, nach Austritt aus der Messzelle (2) in mindestens einer Richtung senkrecht zur optischen Achse, bevorzugt in beiden Richtungen senkrecht zur optischen Achse, ein paralleles Strahlenbündel darstellt.

5. Streulichtmesssystem (1) nach einem der vorhergehenden Ansprüche, wobei das Mittel (8) zur Erzeugung eines Strahlenbündels eine Lichtquelle (10) und mindestens eine Linse (21, 23), bevorzugt eine Lichtquelle (10) und eine Zylinderlinse, umfasst, und wobei die Linse (21, 23) zwischen der Lichtquelle (10) und der Aufnahmeposition (3) für eine Messzelle (2) angeordnet ist.

6. Streulichtmesssystem (1) nach Anspruch 5, wobei die Linse (21, 23) eine Sammellinse, bevorzugt eine Zylindersammellinse, ist, die einen Fokus des Strahlenbündels erzeugt.

7. Streulichtmesssystem (1) nach Anspruch 6, wobei der durch die Sammellinse erzeugte Fokus des Strahlenbündels vor der Eintrittsfläche (61) einer in der Aufnahmeposition (3) angeordneten Messzelle (2) liegt.

8. Streulichtmesssystem (1) nach einem der Ansprüche 5 bis 7, wobei eine Blende (15), bevorzugt eine Lochblende mit bevorzugt einer runden, ovalen, rechteckigen oder polygonen Öffnung, zwischen der Lichtquelle (10) und der Linse (23) angeordnet ist.

9. Streulichtmesssystem (1) nach Anspruch 8, wobei die Normale der Blende (15) um 4 bis 45 Grad, bevorzugt um 6 bis 14 Grad, besonders bevorzugt um 9 bis 11 Grad zur optischen Achse (30) geneigt ist.

10. Streulichtmesssystem (1) nach einem der vorhergehenden Ansprüche, wobei die Aufnahmeposition (3) für eine Messzelle (2) so augestaltet ist, dass eine in der Aufnahmeposition (3) angeordnete Messzelle (2) zur optischen Achse (30) um 4 bis 25 Grad, bevorzugt um 6 bis 18 Grad, besonders bevorzugt um 7 bis 12 Grad geneigt ist.

11. Streulichtmesssystem (1) nach einem der vorhergehenden Ansprüche, wobei eine Sammellinse (25) zwischen der Aufnahmeposition (3) für eine Messzelle (2) und dem Fotodetektor angeordnet ist, die einen Fokus eines durch eine in der Aufnahmeposition (3) angeordneten Messzelle (2) hindurchtretenden Strahlenbündels erzeugt und wobei im Bereich des durch die Sammellinse (25) erzeugten Fokus des Strahlenbündels eine Stoppblende (14) positioniert ist, so dass das Strahlenbündel wenigstens teilweise, bevorzugt vollständig auf die Stoppblende (14) trifft.

12. Streulichtmesssystem (1) nach Anspruch 11, wobei bei leerer Messzelle (2) und/oder ohne Messzelle (2) das Strahlenbündel wenigstens teilweise nicht auf die Stoppblende (14) trifft, und wobei das Strahlenbündel wenigstens teilweise auf den Fotodetektor (6) trifft.

13. Analysegerät umfassend ein Streulichtmesssystem (1) nach einem der vorhergehenden Ansprüche.

14. Verfahren zur Bestimmung der Konzentration, Menge und/oder Aktivität mindestens eines Analyten in einer Probe **dadurch gekennzeichnet, dass** die Probe in einer Messzelle (2) mit einem oder mehreren Reagenzien zu einem Reaktionsansatz vermischt wird und die Änderung der Absorption und/oder der Intensität des gestreuten Lichts des Reaktionsansatzes mit einem Streulichtmesssystem (1) gemäß einem der Ansprüche 1 - 12 oder mit einem Analysegerät gemäß Anspruch 13 bestimmt wird, wobei die Absorptionsänderung und/oder die Änderung der Intensität des gestreuten Lichts mit der Konzentration, Menge und/oder Aktivität des Analyten korreliert.

15. Verfahren nach Anspruch 14, wobei es sich bei der Probe um eine menschliche oder tierische Körperflüssigkeit handelt, vorzugsweise um Vollblut, Blutplasma, Serum, Liquor oder Urin.
